# EUROPÄISCHE PATENTSCHRIFT

(11) **EP 2 600 112 B1**
(45) Veröffentlichungstag und Bekanntmachung des Hinweises auf die Patenterteilung: **05.03.2014**
(21) Anmeldenummer: 11191174.9
(22) Anmeldetag: 29.11.2011
(51) Int. Cl.: G01D 5/34

(54) **Vorrichtung zur Messung des Drehwinkels zweier relativ zueinander um eine Drehachse rotierender Objekte**
Device for measuring the relative angle of two objects which can be rotated relative to each other around a rotation axis
Dispositif de mesure de l'angle de rotation de deux objets tournant l'un par rapport à l'autre autour d'un axe

(43) Veröffentlichungstag der Anmeldung: 05.06.2013
(73) Patentinhaber: SICK STEGMANN GmbH, 78166 Donaueschingen (DE)
(72) Erfinder: Basler, Stefan, 78086 Brigachtal (DE)
(74) Vertreter: Ludewigt, Christoph

(56) Entgegenhaltungen:
- US-A1- 2003 141 441
- US-A1- 2011 141 451

## Beschreibung

Die Erfindung betrifft eine Vorrichtung zur Messung des Drehwinkels zweier relativ zueinander um eine Drehachse rotierender Objekte gemäß dem Oberbegriff des Patentanspruchs 1.

Bekannt sind optische Drehgeber, welche den Drehwinkel zweier relativ zueinander um eine Drehachse rotierender Objekte messen, welche einen Lichtsender aufweisen, welche eine dem einen Objekt zugeordneten, auf einem Träger angeordnete Maßverkörperung aufweisen und welche eine dem anderen Objekt zugeordneten Abtasteinheit zur Abtastung der Maßverkörperung aufweisen, wobei eine Auswerteeinheit zur Erzeugung von winkelabhängigen Positionswerten aus bei der Abtastung der Maßverkörperung erhaltenen Signalen vorgesehen ist. Die Maßverkörperung wird oft durch einen Code gebildet, der das einfallende Licht moduliert, welches anschließend in der Abtasteinheit detektiert und weiterverarbeitet wird.

Es besteht ein Bedarf an Drehgebern, welche Sicherheitsanforderungen genügen und insbesondere die Anforderungen der SIL3 (Safety Integrity Level 3) erfüllen. Die Sicherheitsanforderungsstufe 3 wird beispielsweise in der Sicherheitsnorm EN 61508 beschrieben und stellt ein Maß für die Zuverlässigkeit des Systems in Abhängigkeit von der Gefährdung dar. Typische Sicherheitsfunktionen sind Notausschaltungen, Abschalten überhitzter Geräte oder die Überwachung gefährlicher Bewegungen. Bei Geräten, die diese Anforderungen erfüllen sollen, muss gewährleistet sein, dass auch bei einem geringfügigen Defekt, beispielsweise eines Sensorsystems, das Gerät weiterhin die erforderlichen Messungen durchführen kann. Eine dieser Anforderungen der SIL3 bezieht sich auf die Redundanz und Diversität der Drehgeber, was bedeutet, dass mehr als ein Sensorsystem in dem Drehgeber verfügbar ist (Redundanz) und diese mehreren Sensorsysteme idealerweise nicht das gleiche Messprinzip verwenden (Diversität). Dadurch wird sichergestellt, dass bei Ausfall eines Sensorsystems der Drehgeber weiterhin funktionsfähig ist und somit den geforderten Sicherheitsstandards genügt.

Bekannte optische Drehgeber, welche der SIL3-Anforderung genügen, verwenden duplizierte Sensorsysteme. Dies erfüllt zwar die Anforderung der Redundanz, ist jedoch aufwendig und teuer und lässt keinen kompakten Drehgeber zu.

Die Aufgabe der Erfindung besteht daher darin, eine Vorrichtung zur Messung des Drehwinkels zweier relativ zueinander um eine Drehachse rotierender Objekte anzugeben, welcher einen kompakten Aufbau ermöglicht und insbesondere kostengünstig herzustellen ist.

Die Aufgabe der Erfindung wird gelöst durch eine Vorrichtung zur Messung des Drehwinkels zweier relativ zueinander um eine Drehachse rotierender Objekte mit den Merkmalen des Patentanspruchs 1.

Vorteilhafte Ausgestaltungen und Weiterbildungen der Erfindung sind in den abhängigen Ansprüchen angegeben.

Die erfindungsgemäße Vorrichtung zur Messung des Drehwinkels zweier relativ zueinander um eine Drehachse rotierender Objekte, mit einem Lichtsender, mit einer dem einen Objekt zugeordneten, auf einem Träger angeordneten Maßverkörperung und mit einer dem anderen Objekt zugeordneten Abtasteinheit zur Abtastung der Maßverkörperung zeichnet sich dadurch aus, dass auf dem Träger ein Polarisator angeordnet ist und dass sowohl die Maßverkörperung als auch der Polarisator von demselben Lichtsender beleuchtet werden und sowohl das von der Maßverkörperung als auch das von dem Polarisator beeinflusste Licht von derselben Abtasteinheit detektiert werden. Die Verwendung einer Maßverkörperung zur Bestimmung des Drehwinkels stellt ein grundsätzlich anderes Messprinzip als die Verwendung eines Polarisators zur Bestimmung des Drehwinkels dar, sodass die Anforderungen der SIL3 im Hinblick auf Diversität durch die erfindungsgemäße Vorrichtung ermöglicht werden. Dabei besteht auf einfache Art und Weise die Möglichkeit, sowohl die Maßverkörperung als auch den Polarisator auf einem Träger anzuordnen, so dass ein kompakter Aufbau ermöglicht ist. Dadurch, dass sowohl zur Beleuchtung der Maßverkörperung als auch des Polarisators lediglich eine Lichtquelle und sowohl zur Abtastung der Maßverkörperung als auch des Polarisators lediglich eine Abtasteinheit verwendet werden, ergibt sich ein besonders kompakter und kostengünstiger Aufbau.

Gemäß einer vorteilhaften Ausführungsform der Erfindung sind die Maßverkörperungen in einem ersten Kreisring und der Polarisator in einem zweiten Kreisring angeordnet, wobei der erste Kreisring und der zweite Kreisring zentrisch zueinander angeordnet sind. Dies ermöglicht einen einfachen kostengünstig herzustellenden Träger.

Vorteilhafterweise sind die Maßverkörperung und der Polarisator in demselben Kreisring angeordnet. Dabei ist vorzugsweise der Polarisator umlaufend ausgebildet und von der Maßverkörperung überlagert. Dadurch wird ein kompakter Aufbau erreicht.

Gemäß einer besonders bevorzugten Ausführungsform der Erfindung hat die Maßverkörperung für sich genommen keinen Einfluss auf die Polarisationseigenschaften von Licht, sodass der Einfluss des Polarisators auf das Licht eindeutig von dem Einfluss der Maßverkörperung auf das Licht unterschieden werden kann. Dabei ist jedoch nicht ausgeschlossen, dass die Maßverkörperung von dem Polarisator überlagert sein kann.

Vorzugsweise ist der Träger als transparente Scheibe, insbesondere als Glasscheibe ausgebildet. Dies ermöglicht den Betrieb der Vorrichtung im Durchlichtverfahren.

Vorzugsweise ist das Polarisationselement durch ein Polarisationsfilter gebildet, welcher besonders kostengünstig herzustellen ist und insbesondere für das Durchlichtverfahren geeignet ist.

Vorteilhafterweise ist die Maßverkörperung durch abwechselnd angeordnete lichtdurchlässige und lichtundurchlässige Bereiche gebildet, welche insbesondere kostengünstig herzustellen sind und vorzugsweise für das Durchlichtverfahren geeignet sind.

In einer alternativen bevorzugten Ausführungsform der Erfindung ist der Träger als lichtundurchlässige Scheibe, insbesondere als reflektierende Scheibe, ausgebildet, was einen kompakten Aufbau im reflektiven Verfahren ermöglicht.

Gemäß einer bevorzugten Ausführungsform der Erfindung ist das Polarisationselement durch einen Polarisationsfilter mit aus Sicht des Lichtsenders dahinter angeordnetem Reflektor gebildet, welcher insbesondere für ein reflektives Verfahren kostengünstig herzustellen ist.

Vorzugsweise ist die Maßverkörperung durch abwechselnd angeordnete absorbierende und reflektierende Bereiche gebildet, welche insbesondere für ein reflektives Verfahren geeignet sind.

Die Erfindung wird anhand der nachfolgenden Figuren ausführlich erläutert. Es zeigt
- Fig. 1: ein erstes Ausführungsbeispiel einer erfindungsgemäßen Vorrichtung und
- Fig. 2: ein zweites Ausführungsbeispiel einer erfindungsgemäßen Vorrichtung.

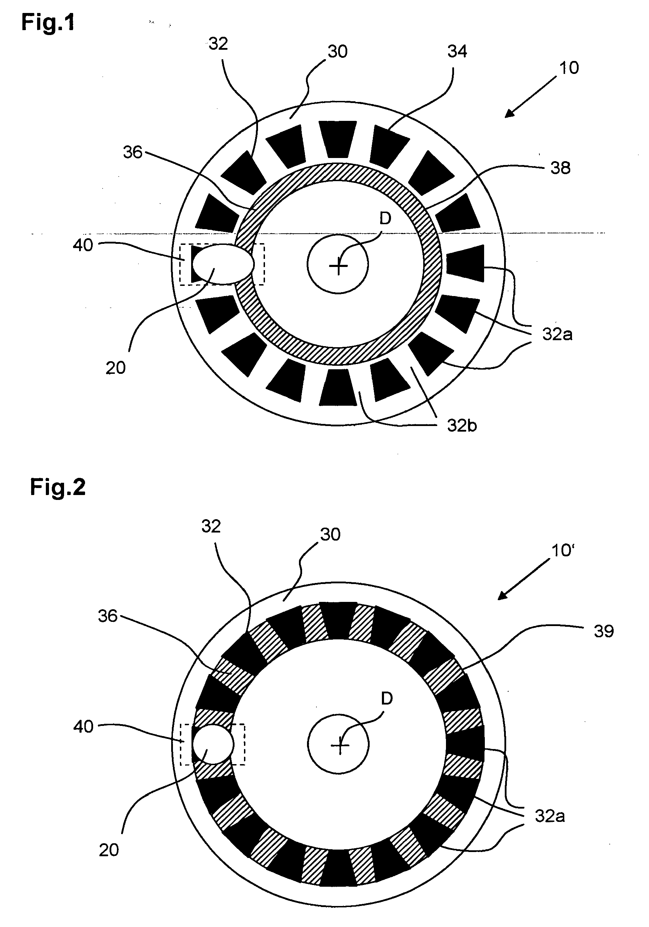

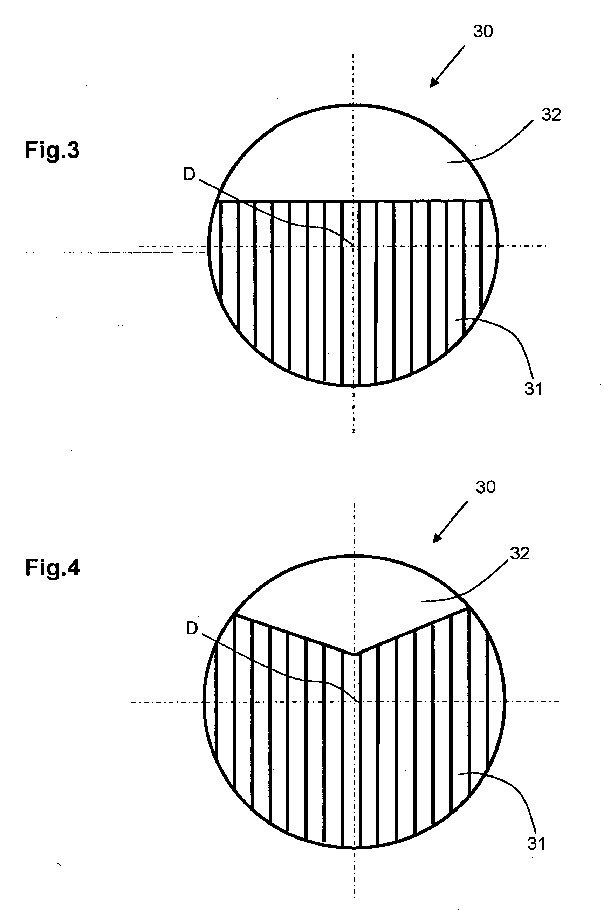

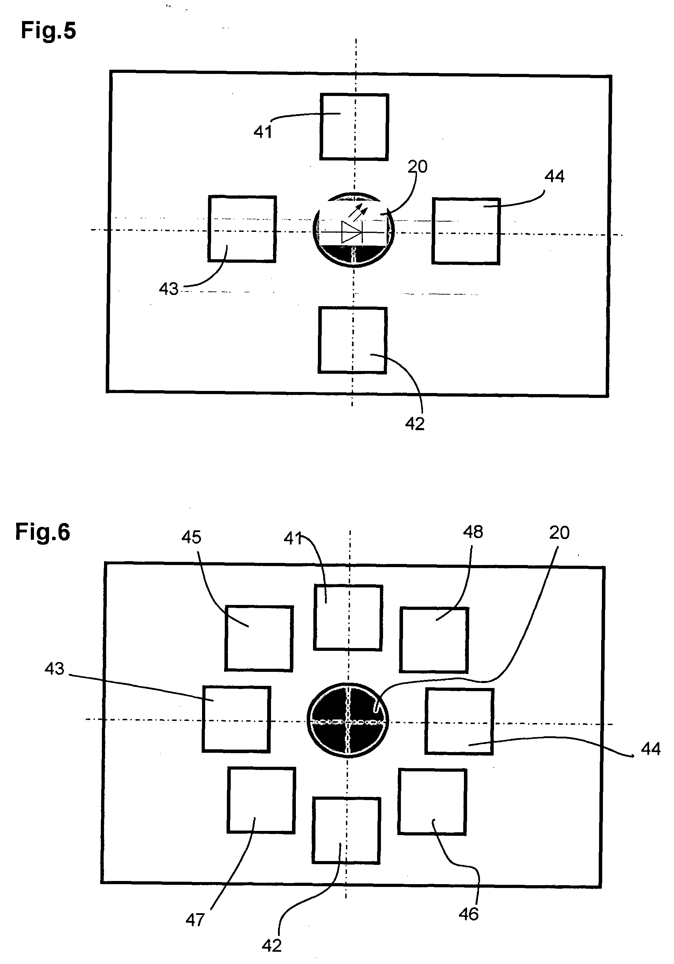

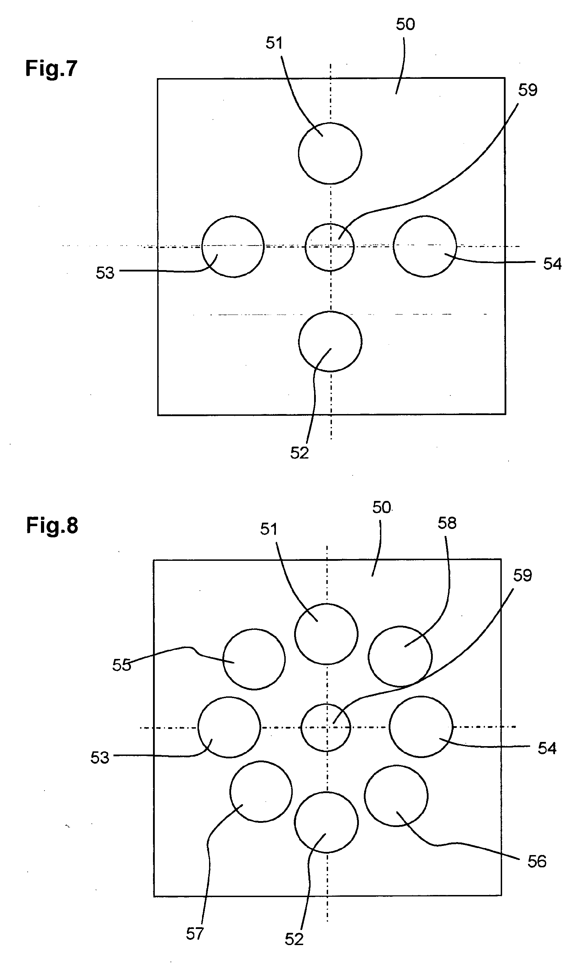

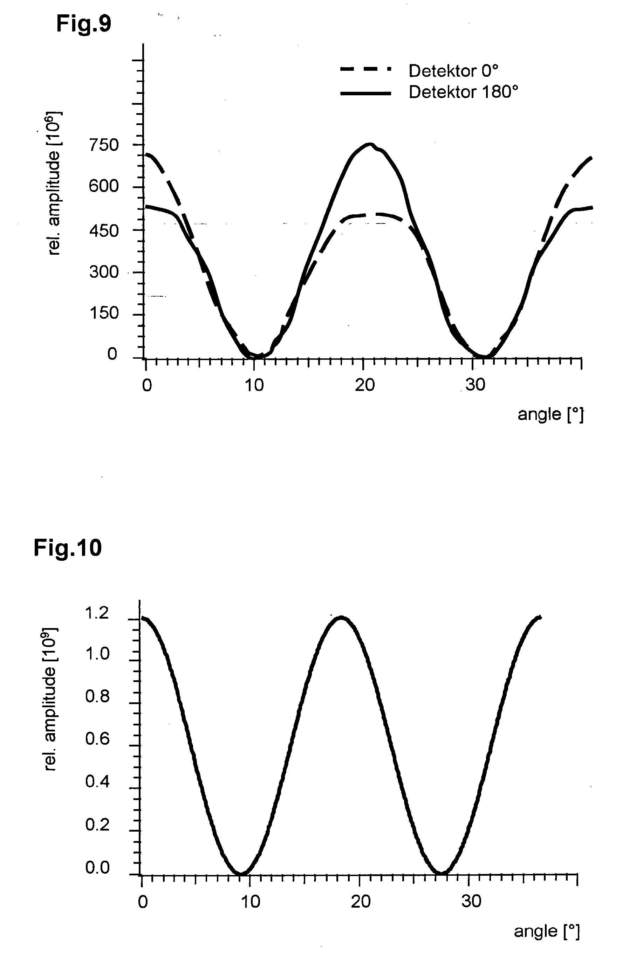

Figur 1 zeigt eine schematische Darstellung einer Vorrichtung 10 zur Messung des Drehwinkels zweier relativ um eine Drehachse D rotierender Objekte, welche beispielsweise als Welle eines Motors und als feststehendes Maschinenteil ausgebildet sein können. Die Vorrichtung 10 weist einen Lichtsender 20 auf, welcher im vorliegenden Ausführungsbeispiel derart angeordnet ist, dass seine optische Achse im Wesentlichen parallel zur Drehachse D, aber exzentrisch zu dieser angeordnet ist. Der Lichtsender 20 kann dabei beispielsweise dem feststehenden Maschinenteil zugeordnet sein, insbesondere direkt an dem Maschinenteil angeordnet oder wie das Maschinenteil feststehend an einem weiteren Element angeordnet sein.

Die Vorrichtung 10 weist einen Träger 30 auf, welcher beispielsweise der rotierenden Welle zugeordnet ist und insbesondere an der Stirnfläche der Welle angeordnet sein kann. In einer Ausführungsform ist der Träger 30 als lichtundurchlässige Scheibe ausgebildet, welche beispielsweise zumindest abschnittsweise eine reflektierende Oberfläche aufweist. Die Vorrichtung 10 weist eine Abtasteinheit 40 auf, welche in dieser Ausführungsform auf der gleichen Seite wie der Lichtsender 20 des Trägers 30 angeordnet ist und welche das an dem Träger 30 reflektierte Licht detektiert. Dadurch ergibt sich ein Aufbau der Vorrichtung 10 für ein reflektives Verfahren.

Auf dem Träger 30, welcher insbesondere um die Drehachse D rotiert, ist in einem ersten Kreisring 34 eine Maßverkörperung 32 angeordnet, welche beispielsweise lichtabsorbierende Bereiche 32a aufweist, die im Abstand zueinander in dem ersten Kreisring 34 angeordnet sind, sodass zwischen den lichtabsorbierenden Bereichen 32a lichtreflektierende Bereiche 32b gebildet sind. Die lichtreflektierende Bereiche 32b können direkt durch die reflektierende Oberfläche des Trägers 30 oder durch ein anderes reflektierendes Material gebildet sein. Auf den Träger 30 ist in einem zweiten Kreisring, welcher konzentrisch zu dem Kreisring 34 angeordnet ist, ein Polarisator 36 ausgebildet. Dieser kann beispielsweise als Polarisationsfilter ausgebildet sein. Vorzugsweise ist der Träger lediglich in den Kreisringen 34, 36 reflektierend ausgebildet.

Der Lichtsender ist azentrisch über dem ersten Kreisring 34 und/oder dem zweiten Kreisring 36 angeordnet. Die Lichtintensität des an dem Träger 30 im Bereich des Polarisators 36 reflektierten Licht ändert sich in Abhängigkeit von dem Drehwinkel des Trägers 30. Die an dem Polarisator 36 bzw. an der reflektierenden Oberfläche des Trägers 30 nach Durchgangs des Lichts durch den Polarisator 36 reflektierte Lichtintensität kann in der Abtasteinheit 40 bestimmt werden. Weiterhin wird die Intensität des von dem Lichtsender 20 ausgesandten Lichts durch die Maßverkörperung 32 moduliert, wobei insbesondere durch die lichtabsorbierende Bereiche 32a die Lichtintensität vollständig abgedunkelt wird und durch die reflektierenden Bereiche 32b entsprechend reflektiert wird. Die Maßverkörperung 32 hat dabei insbesondere keinen Einfluss auf die Polarisationseigenschaften des Lichts, sodass eine unabhängige Auswertung des durch die Maßverkörperung 32 modulierten Lichts und des durch den Polarisator 36 modulierten Lichts erfolgen kann.

Alternativ kann die Abtasteinheit 40 auch auf der dem Lichtsender 20 gegenüberliegenden Seite des Trägers 30 angeordnet sein. Die unterschiedlichen Positionen der Abtasteinheit 40 werden durch die gestrichelte Darstellung der Abtasteinheit 40 verdeutlicht. In dieser Ausführungsform ist der Träger 30 als lichtdurchlässige Scheibe, beispielsweise als Glassscheibe oder als transparente Kunststoffscheibe ausgebildet. Der Polarisator 36 ist beispielsweise als Polarisationsfilter ausgebildet. Die Maßverkörperung 32 ist derart ausgebildet, dass die lichtundurchlässigen Bereiche 32a mit lichtdurchlässigen Bereichen 32b abwechseln. Dazu können beispielsweise die lichtundurchlässigen Bereiche 32a reflektierend oder absorbierend ausgebildet sein, während die lichtdurchlässigen Bereiche 32b unbehandelte Abschnitte des transparenten Trägers 30 darstellen können.

Figur 2 zeigt eine alternative Ausführungsform einer Vorrichtung 10' zur Messung des Drehwinkels der relativ zueinander um eine Drehachse rotierender Objekte, welche sich von der in Figur 1 dargestellten Vorrichtung 10 lediglich durch die Anordnung der Maßverkörperung 32 und des Polarisators 36 auf dem Träger 30 unterscheidet. In dieser Ausführungsform sind sowohl die Maßverkörperung 32 als auch Polarisator 36 in einem einzigen Kreisring 39 angeordnet. Der Polarisator 36 ist insbesondere umlaufend ausgebildet und von der Maßverkörperung 32 überlagert.

Ist in einer Ausführungsform der Träger 30 als lichtundurchlässige Scheibe, insbesondere als zumindest abschnittsweise reflektierende Scheibe ausgebildet, können beispielsweise die Bereiche 32a der Maßverkörperung 32 lichtabsorbierend ausgebildet sein, während in den dazwischenliegenden Bereichen lichtreflektierende Bereiche 32b angeordnet sind. Dabei ist vorzugsweise der Träger lediglich in dem Kreisring 39 reflektierend ausgebildet.

Ist in einer alternativen Ausführungsform der Träger 30 als transparente Scheibe ausgebildet, können beispielsweise die Bereiche 32a der Maßverkörperung 32 als reflektierende oder absorbierende Bereiche, insbesondere als lichtundurchlässige Bereich ausgebildet sein, während die Abschnitte 32b als lichtdurchlässige Bereiche ausgebildet sind.

Die Abtasteinheit 40 kann in jeder der Ausführungsformen als polarisationsempfindlicher Lichtempfänger, insbesondere als polarisationsempfindliche anwendungsspezifische integrierte Schaltung (ASIC - Application specific integrated circuit) ausgebildet sein.

Weiterhin ist in der Regel in jeder der Ausführungsformen eine nicht dargestellte Auswerteeinheit zur Erzeugung von unabhängigen Positionswerten aus bei der Abtastung der Maßverkörperung erhaltenen Signalen vorgesehen.

### Bezugszeichenliste

- 10: Vorrichtung
- 10': Vorrichtung
- 20: Lichtsender
- 30: Träger
- 32: Maßverkörperung
- 32a: Bereich
- 32b: Bereich
- 34: erster Kreisring
- 36: Polarisator
- 38: zweiter Kreisring
- 39: Kreisring
- 40: Abtasteinheit

## Patentansprüche

1. Vorrichtung (10, 10') zur Messung des Drehwinkels zweier relativ zueinander um eine Drehachse rotierender Objekte, mit einem Lichtsender (20), mit einer dem einen Objekt zugeordneten, auf einem Träger (30) angeordneten Maßverkörperung (32) und mit einer dem anderen Objekt zugeordneten Abtasteinheit (40) zur Abtastung der Maßverkörperung (32),
**dadurch gekennzeichnet, dass** auf dem Träger (30) ein Polarisator (36) angeordnet ist und dass sowohl die Maßverkörperung (32) als auch der Polarisator (36) von demselben Lichtsender (20) beleuchtet werden und sowohl das von der Maßverkörperung (32) als auch das von dem Polarisator (36) beeinflusste Licht von derselben Abtasteinheit (40) detektiert werden.

2. Vorrichtung nach Anspruch 1,
**dadurch gekennzeichnet, dass** die Maßverkörperung (32) in einem ersten Kreisring (34) und der Polarisator (36) in einem zweiten Kreisring (38) angeordnet sind, wobei der erste Kreisring (32) und der zweite Kreisring (34) konzentrisch zueinander angeordnet sind.

3. Vorrichtung nach Anspruch 1 oder 2,
**dadurch gekennzeichnet, dass** die Maßverkörperung (32) und der Polarisator (36) in demselben Kreisring (39) angeordnet sind.

4. Vorrichtung nach einem der vorhergehenden Ansprüche,
**dadurch gekennzeichnet, dass** die Maßverkörperung (32) keinen Einfluss auf die Polarisationseigenschaften von Licht hat.

5. Vorrichtung nach einem der vorhergehenden Ansprüche,
**dadurch gekennzeichnet, dass** der Träger (30) als transparente Scheibe, insbesondere als Glasscheibe, ausgebildet ist.

6. Vorrichtung nach einem der vorhergehenden Ansprüche,
**dadurch gekennzeichnet, dass** der Polarisator (36) durch einen Polarisationsfilter gebildet ist.

7. Vorrichtung nach einem der vorhergehenden Ansprüche,
**dadurch gekennzeichnet, dass** die Maßverkörperung (32) durch abwechselnd angeordnete lichtdurchlässige Bereiche (32b) und lichtundurchlässige Bereiche (32a) gebildet ist.

8. Vorrichtung nach einem der vorhergehenden Ansprüche,
**dadurch gekennzeichnet, dass** der Träger (30) als lichtundurchlässige Scheibe, insbesondere als reflektierende Scheibe, ausgebildet ist.

9. Vorrichtung nach einem der vorhergehenden Ansprüche,
**dadurch gekennzeichnet, dass** der Polarisator (36) durch einen Polarisationsfilter mit aus Sicht des Lichtsenders (20) dahinter angeordnetem Reflektor gebildet ist.

10. Vorrichtung nach einem der vorhergehenden Ansprüche,
**dadurch gekennzeichnet, dass** die Maßverkörperung (32) durch abwechselnd angeordnete absorbierende Bereiche (32a)und reflektierende Bereiche (32b) gebildet ist.

## Claims

1. Device (10, 10') for measuring the angle of rotation of two rotating objects rotating relative to each other about an axis of rotation, including a light transmitter (20), a material measure ( 32) associated with the object and arranged on a support (30) and with a sensing unit (40) associated with the other object for scanning the material measure (32), **characterized in that** a polarizer (36) is arranged on the support (30), and **in that** both the material measure (32) and the polarizer (36) are illuminated from the same light transmitter (20), and both the light influenced by the material measure (32) and the light influenced by the polarizer (36) are detected by the same light sensing unit (40).

2. Device according to claim 1, **characterized in that** the material measure scale (32) is arranged in a first annulus (34) and the polarizer (36 ) is arranged in a second annulus (38), wherein the first annulus (32) and the second annulus (34) are arranged concentrically to one another.

3. Device according to claim 1 or 2, **characterized in that** the material measure (32) and the polarizer (36) are arranged on the same annulus (39).

4. Device according to one of the preceding claims, **characterized in that** the material measure (32) has no influence on the polarization characteristics of light.

5. Device according to one of the preceding claims, **characterized in that** the support (30) is provided as a transparent panel, in particular designed as a glass pane.

6. Device according to one of the preceding claims, **characterized in that** the polarizer (36) is formed by a polarization filter.

7. Device according to one of the preceding claims, **characterized in that** the material measure (32) is formed by alternately arranged transparent regions (32b) and opaque regions (32a).

8. Device according to one of the preceding claims, **characterized in that** the support (30) is formed as an opaque disk, in particular as a reflective disk.

9. Device according to one of the preceding claims, **characterized in that** the polarizer (36) is formed by a polarization filter behind which a reflector is arranged as seen from the light emitter (20).

10. Device according to one of the preceding claims, **characterized in that** the material measure (32) is formed by alternately arranged absorbing regions (32a) and reflecting regions (32b).

## Revendications

1. Dispositif (10, 10') pour la mesure de l'angle de rotation de deux objets en rotation relative l'un par rapport à l'autre autour d'un axe de rotation, comprenant un émetteur de lumière (20), avec un étalon dimensionnel (32) associé à l'un des objets et agencé sur un support (30), et comprenant une unité de palpage (40) associée à l'autre objet pour le palpages de l'étalon dimensionnel (32),
**caractérisé en ce qu'**un polariseur (36) est agencé sur le support (30), et **en ce que** l'étalon dimensionnel (32) tout comme le polariseur (36) sont éclairés par le même émetteur de lumière (20), et **en ce que** la lumière influencée par l'étalon dimensionnel (32) tout comme la lumière influencée par le polariseur (36) sont détectées par la même unité de palpage (40).

2. Dispositif selon la revendication 1,
**caractérisé en ce que** l'étalon dimensionnel (32) est agencé dans une première bague circulaire (34) et le polariseur (36) est agencé dans une seconde bague circulaire (38), et la première bague circulaire (32) et la seconde bague circulaire (34) sont agencées concentriques l'une par rapport à l'autre.

3. Dispositif selon la revendication 1 ou 2,
**caractérisé en ce que** l'étalon dimensionnel (32) et le polariseur (36) sont agencés dans la même bague circulaire (39).

4. Dispositif selon l'une des revendications précédentes,
**caractérisé en ce que** l'étalon dimensionnel (32) n'a aucune influence sur les propriétés de polarisation.

5. Dispositif selon l'une des revendications précédentes,
**caractérisé en ce que** le support (30) est réalisé comme un disque transparent, en particulier comme un disque en verre.

6. Dispositif selon l'une des revendications précédentes,
**caractérisé en ce que** le polariseur (36) est formé par un filtre à polarisation.

7. Dispositif selon l'une des revendications précédentes,
**caractérisé en ce que** l'étalon (32) est formé par des zones transparentes à la lumière (32b) et par des zones opaques à la lumière (32a), agencées en alternance.

8. Dispositif selon l'une des revendications précédentes,
**caractérisé en ce que** le support (30) est réalisé sous forme de disque opaque à la lumière, en particulier d'un disque réfléchissant.

9. Dispositif selon l'une des revendications précédentes,
**caractérisé en ce que** le polariseur (36) est formé par un filtre à polarisation avec un réflecteur agencé par derrière, vu depuis l'émetteur de lumière (20).

10. Dispositif selon l'une des revendications précédentes,
**caractérisé en ce que** l'étalon (32) est formé par des régions absorbantes (32a) et par des régions réfléchissantes (32b) agencées en alternance.
